# EUROPÄISCHE PATENTSCHRIFT

(11) **EP 1 780 857 B1**
(45) Veröffentlichungstag und Bekanntmachung des Hinweises auf die Patenterteilung: **07.10.2015**
(21) Anmeldenummer: 06021924.3
(22) Anmeldetag: 19.10.2006
(51) Int. Cl.: H02H 7/08, H02H 7/093, H02P 25/14

(54) **Steuereinheit für einen elektrischen Antriebsmotor**
Control unit for an electrical drive motor
Unité de commande pour un moteur d'entraînement électrique

(30) Priorität: 31.10.2005 DE 102005052022; 08.08.2006 DE 102006036956
(43) Veröffentlichungstag der Anmeldung: 02.05.2007
(73) Patentinhaber: Diehl AKO Stiftung & Co. KG, 88239 Wangen (DE)
(72) Erfinder: Zinke, Michael, 92353 Postbauer-Heng (DE)
(74) Vertreter: Diehl Patentabteilung

(56) Entgegenhaltungen:
- EP-A2- 0 362 496
- EP-A2- 1 788 685
- DE-A1- 10 122 877
- US-A- 5 568 025

## Beschreibung

Die Erfindung bezieht sich auf eine Steuereinheit zur Steuerung und / oder Regelung eines elektrischen Antriebsmotors. Bei dem Antriebsmotor kann es sich dabei sowohl um einen Universalmotor als auch um einen Gleichstrommotor handeln.

Ein Gleichstrommotor ist ein elektrischer Antriebsmotor, der mit Gleichstrom betrieben wird. Er umfasst in der Regel einen unbeweglichen Stator zur Vorgabe eines ortsfesten Magnetfeldes durch einem Permanent- oder Elektromagneten und einen drehbeweglich gelagerten Rotor oder Anker mit einem oder mehreren Wicklungssträngen, die über einen Kommutator an die Gleichstromversorgung angeschlossen ist. Der Kommutator weist in der Regel Bürstenkontakte auf, so dass während einer Drehung des Ankers oder Rotors die Polung des Wicklungsstranges wechselt. Auf diese Weise ist im Betrieb die Aufrechterhaltung der Drehbewegung gewährleistet. Die Vorgabe des Motorstroms und damit der Drehzahl erfolgt bei elektrisch geregelten Motoren üblicherweise mittels eines Transistor-Bauelements. Die Drehrichtung des Ankers wird üblicherweise mittels zweier beispielsweise als Relais ausgeführter Umschaltkontakte vorgegeben.

Bei einem Universalmotor sind Stator und Anker zur Erzeugung der notwendigen Magnetfelder mit Elektromagneten bzw. Wicklungssträngen versehen, die z.B. bei einem sogenannten Reihenschlussmotor in Reihe geschaltet sind. Bei einem Universalmotor wechseln somit bei einem Umpolen das Erregerfeld des Stators und der die Wicklung des Ankers durchfließende Strom ihre Richtung synchron, so dass die Drehrichtung unbeeinflusst bleibt. Daher ist ein Betrieb mit Wechselstrom möglich. Für die Vorgabe des Motorstroms und somit für die Drehzahl des Antriebsmotors wird häufig ein Triac oder ein Thyristor eingesetzt. Die Stromsteuerung erfolgt dabei mittels einer sogenannten Phasenanschnittsteuerung.

Ein häufiger Fehler bei derartigen Antriebsmotoren besteht im Durchlegieren eines mittels des Steuersignals angesteuerten und die Leistung und damit die Drehzahl des Antriebsmotors festlegenden Halbleiterbauelements. Als Folge lässt sich das Halbleiterbauelement nicht mehr abschalten. Ein unkontrolliertes Hochlaufen des Antriebsmotors mit voller Leistung und damit maximal möglicher Drehzahl ist die Folge. Dies kann zu Beschädigungen sowohl des Antriebsmotors als auch einer Vorrichtung, in der der Antriebsmotor verbaut ist, führen. So kann bei einer Haushaltswaschmaschine ein unkontrolliertes und schnelles Schleudern der Trommel zu mechanischen Beschädigungen des gesamten Geräts führen.

Nach dem Stand der Technik sind verschiedene Schutzmaßnahmen gegen ein unkontrolliertes Hochlaufen des Antriebsmotors bekannt.

So ist in der DE 35 20 099 A1 und der EP 0 499 123 A2 eine Steuereinheit beschrieben, die jeweils die Drehzahl eines Antriebsmotors mittels eines Halbleiterbauelements steuern. Bei Überschreitung der vorgegebenen Solldrehzahl wird auf einen Defekt des Halbleiterbauelements geschlossen. Als Maßnahme zum Schutz des hochlaufenden Antriebsmotors wird der Motorstromkreis unterbrochen.

In der DE 35 20 099 A1 wird bei Überschreiten einer vorgegebenen Maximaldrehzahl ein Relais ausgelöst, das den Motorstromkreis unterbricht und den Antriebsmotor außer Betrieb setzt. In der EP 0 499 123 A2 wird der Antriebsmotor zum Anhalten schlagartig in Gegenrichtung bestromt und somit abrupt abgebremst. Anschließend wird der Motorstromkreis vollständig unterbrochen und zusätzlich schaltungstechnisch verriegelt, so dass eine erneute Inbetriebnahme des Antriebsmotors nicht durchführbar ist. Hierdurch ist ein zusätzlicher Schutz vor mechanischer Beschädigung gegeben.

In der DE 37 43 396 A1 ist eine Elektronikeinheit zum Schutz eines drehzahlgesteuerten Antriebsmotors einer Haushaltswaschmaschine angegeben. Zur Vermeidung eines unerwünschten Hochlaufens des Antriebsmotors wird dort das steuernde Halbleiterbauelement auf einen Kurzschluss überwacht. Die Schaltungsanordnung ist derart ausgeführt, dass bei Feststellen eines Kurzschlusses ein Betrieb nur noch mit einer vorgegebenen Versorgungsspannung für den Stator des Antriebsmotors möglich ist. Infolgedessen dreht sich der Rotor des Antriebsmotors nur noch mit einer durch die Versorgungsspannung vorgegebenen Drehzahl. Auf diese Weise sind mechanische Beschädigungen vermieden. Außerdem ist ein eingeschränkter Betrieb der Haushaltswaschmaschine möglich.

In der DE 34 32 845 A1 ist eine Elektronikeinheit zur Steuerung eines Universalmotors beschrieben, mit welcher ein Defekt eines einen Antriebsmotor steuernden Halbleiterbauelements erkannt wird. Die dort beschriebene Elektronikeinheit beinhaltet eine Vergleichsschaltung, bei der zum Halbleiterbauelement des Antriebsmotors ein zweites Halbleiterbauelement ohne Last parallel geschalten wird. Beide Halbleiterbauelemente erhalten das gleiche Steuersignal und sind über einen Komparator miteinander verschalten. Im Fall eines Defektes des Halbleiterbauelements des Motors fällt an diesem eine andere Spannung ab als an dem zweiten, parallel geschalteten Halbleiterbauelement. Dieser unterschiedliche Spannungsabfall wird mit Hilfe der Komparatorschaltung registriert und führt zum Auslösen einer Sicherung, die den Motorstromkreis unterbricht.

Aus der EP 0 362 496 A2 ist eine Steuerschaltung für einen elektrischen Antriebsmotor bekannt, bei der bei Erkennen der Überschreitung einer vorgegebenen Solldrehzahl durch entsprechendes Beschalten der beiden für die Drehrichtungsvorgabe vorgesehener Relais eine Überbrückung der Wicklung des Motors und damit ein Anhalten erreicht wird.

In der DE 10 122 877 ist schließlich ein Verfahren zum Schutz einer Motorsteuerung eines Antriebsmotors angegeben, wobei die Elektronikeinheit einen Mikrocontroller zur Motorsteuerung verwendet. Die Ansteuerung des Antriebsmotors geschieht, indem der Mikrocontroller wechselseitig zwei Relais schaltet. Bei einem Defekt des Mikrocontrollers werden beide Relais gleichzeitig geschalten. In diesem Fall ist eine Beschädigung der Umschaltkontakte und nachgelagert eine Beschädigung des Halbleiterbauelements möglich. Das beschriebene Verfahren zum Schutz der Motorsteuerung überprüft daher die vom Mikrocontroller ausgegebenen Schaltzustände über eine Logikschaltung. Im Fehlerfall erfolgt eine Abschaltung des Halbleiterbauelements und damit des Antriebsmotors. Auf diese Weise wird eine Beschädigung des Halbleiterbauelements bereits im Vorfeld vermieden.

Der Erfindung liegt die Aufgabe zugrunde, eine Steuereinheit der eingangs genannten Art dahin gehend zu verbessern, dass eine möglichst hohe Abschaltsicherheit des Antriebsmotors erreicht wird.

Diese Aufgabe wird erfindungsgemäß gelöst durch eine Steuereinheit gemäß den Merkmalen des Anspruches 1.

Die Steuereinheit weist dazu einen Solldrehzahlgeber und eine Istdrehzahlerfassung auf. Für die Festlegung der Drehrichtung des Antriebsmotors sind zwei Umschaltkontakte vorgesehen. Zudem weist die Steuereinheit eine Abschalteeinrichtung auf, die eingerichtet ist, bei einem vorgegebenen Überschreiten der Solldrehzahl durch die Istdrehzahl einen der Umschaltkontakte zur Stromunterbrechung zu schalten. Zusätzlich ist die Abschalteeinrichtung eingerichtet, nach dem vorgenommenen Schaltvorgang an dem einem Umschaltkontakt bei einer nicht erwartungsgemäßen Abnahme der Istdrehzahl den Schaltzustand des jeweils anderen Umschaltkontaktes zu ändern.

Somit wird als eine erste Maßnahme zum Schutz des Antriebsmotors bei einem vorgegebenen Überschreiten der Solldrehzahl durch die Istdrehzahl, d.h. wenn die Istdrehzahl die Solldrehzahl über einen Toleranzbereich hinaus überschreitet, entweder der ausgeschaltete Umschaltkontakt eingeschaltet, so dass sich beide Umschaltkontakte im eingeschalteten Zustand befinden, oder aber der eingeschaltete Umschaltkontakt wird ausgeschaltet, so dass sich beide Umschaltkontakte im ausgeschalteten Zustand befinden. Auf diese Weise wird der Antriebsmotor stets stromlos geschalten; er wird vom Versorgungsstrom abgetrennt. Der stromlose Antriebsmotor läuft aus, so dass eine mechanische Beschädigung des Antriebsmotors oder einer von diesem bewegten Vorrichtung an sich sicher vermieden ist, falls es aufgrund einer Beschädigung des Halbleiterbauelements zu einem unkontrolliertem Hochlaufen kommt.

Die Istdrehzahl nimmt jedoch bei einer solchen Maßnahme nicht erwartungsgemäß ab, wenn sich der Umschaltkontakt nicht schalten lässt. Dies ist beispielsweise der Fall, wenn seine Kontakte aufgrund eines zu hohen Motorstroms verschweißt sind. Somit findet trotz Einleiten der ersten Maßnahme keine Abschaltung des Antriebsmotors statt. Der Antriebsmotor dreht mit einer unverminderten Geschwindigkeit weiter, so dass weiterhin die Gefährdung einer mechanischen Beschädigung vorliegt.

Mittels des Ansteuerns des jeweils anderen, d.h. des bislang nicht geschalteten Umschaltkontaktes lässt sich aber, eine ordnungsgemäße Funktion dieses Umschaltkontaktes vorausgesetzt, dennoch ein Zustand erreichen, bei dem beide Umschaltkontakte entweder eingeschalten oder aber ausgeschalten sind. Somit wird der Antriebsmotor durch Einleiten der zweiten Maßnahme stromlos. geschalten. Auf diese Weise ist trotz der Fehlfunktion eines der beiden Umschaltkontakte ein sicheres Abschalten des Antriebsmotors möglich. Hierdurch wird die Abschaltsicherheit gegenüber dem Stand der Technik verbessert.

Demgemäß lässt sich mittels einer kostengünstigen Anpassung der Abschalteeinrichtung eine zusätzliche Abschaltemöglichkeit bei Versagen eines der beiden Umschaltkontakte erreichen. Eine Umgestaltung der Beschaltung des Antriebsmotors ist nicht notwendig. Dabei kann jeder elektrische Antriebsmotor, dessen Drehrichtung mittels Umschaltkontakten vorgegeben wird, insbesondere ein Gleichstrommotor oder ein Universalmotor, mit einer derartigen zusätzlichen Abschaltemöglichkeit versehen werden.

In einer Weiterbildung ist die Abschalteeinrichtung eingerichtet, den Schaltzustand des jeweils anderen Umschaltkontaktes zu ändern, wenn die Istdrehzahl nach Ablauf eines vorgegebenen Zeitintervalls nicht um eine vorgegebene Differenz abgenommen hat. Somit ist der Tatsache Rechnung getragen, dass es einige Zeit benötigt, bis der eingeleitete Abschaltevorgang des Antriebsmotors anhand einer reduzierten Istdrehzahl detektierbar ist. Die vorgegebene Abnahme über ein vorgegebenes Zeitintervall hinweg kann sich dabei insbesondere an einem bekannten Auslaufverhalten des jeweils eingesetzten Antriebsmotors orientieren und insbesondere auch eine Funktion von der erreichten Istdrehzahl vor Einleiten des Abschaltvorganges sein.

In einer bevorzugten Variante ist die Vorrichtung zur Erfassung der Istdrehzahl ein auf einer Drehachse des Motors angeordneter Drehgeber. Ein derartiger Drehgeber, beispielsweise in Form eines Tachogenerators, ist besonders einfach und kostengünstig realisierbar.

Bevorzugt ist mittels der beiden Umschaltkontakte der Anker des Antriebsmotors bestrombar. Diese Ausführungsform ist bei heute eingesetzten Antriebsmotoren üblich.

In einer vorteilhaften Ausführungsform lässt sich mittels zweier Umschaltkontakte in vergleichbarer Weise aber auch das Feld des Stators für eine Änderung der Drehrichtung umpolen.

Zweckmäßigerweise ist eine Schaltungseinheit mit einer schaltungstechnischen Realisierung zur Erfassung der Abweichung der Istdrehzahl von der Solldrehzahl mit der Istdrehzahl vorgesehen. Dabei kann es sich beispielsweise um eine Komparatorschaltung handeln. Eine derartige elektrische Schaltung kann mit einfachen Mitteln und daher kostengünstig realisiert werden.

In einer bevorzugten Weiterbildung ist die Schaltungseinheit als Teil eines Mikrocontrollers ausgeführt. Ein derartiger einen oder mehrere integrierte Schaltkreise umfassender Mikrocontroller ist besonders kostengünstig herstellbar. Zudem ist er aufgrund seiner geringen Größe in einfacher Weise in das Layout der Steuereinheit integrierbar, so dass Änderungen an diesem Layout in einem überschaubaren Rahmen bleiben. Dabei weist der Mikrocontroller zweckmäßig einen internen Schaltkreis zur Erfassung des Überschreitens der vorgegebenen Istdrehzahl auf. Insbesondere ist es von Vorteil, wenn die Abschalteeinrichtung als solche als Teil eines Mikrocontroller ausgeführt bzw. in diesen integriert ist.

In einer weiteren vorteilhaften Ausgestaltung weist der Mikrocontroller eine integrierte Speichereinheit auf, in der der jeweils an den Umschaltkontakten vorgegebene Schaltzustand hinterlegt ist. Auf diese Weise kann bei einer nicht erwartungsgemäßen Abnahme der Istdrehzahl anhand einer im Mikrocontroller hinterlegten Logik in einfacher Weise der jeweils andere Umschaltkontakt geschalten werden. Als Speicher eignet sich beispielsweise ein Register, in dem ein mit dem Schaltzustand des jeweiligen Umschaltkontakts korrespondierender Zahlenwert hinterlegt ist.

Nachfolgend wird die Erfindung anhand einer Zeichnung erläutert.

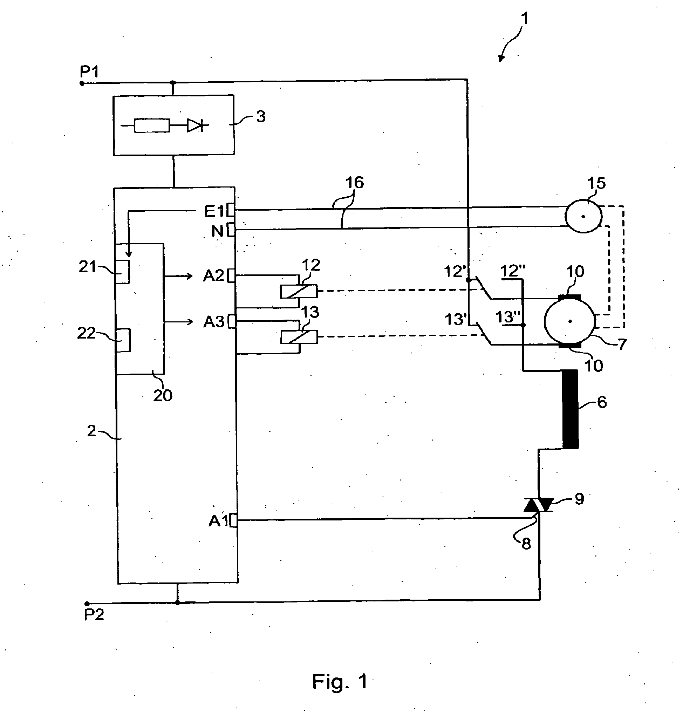

Die einzige Figur zeigt schematisch eine Steuereinheit 1 für einen elektrischen Antriebsmotor. Die Steuereinheit 1 wird über eine zwischen den Phasen P1 und P2 angelegte Spannung mit elektrischer Energie versorgt. Ein Mikrocontroller 2 ist für die Steuerung des Antriebsmotors ausgebildet. Der Mikrocontroller 2 wird von einer Versorgungseinheit 3 mit elektrischer Energie versorgt.

Bei dem Antriebsmotor handelt es sich um einen Reihenschlussmotor, der einen Stator 6 und einen zu diesem in Reihe geschalteten, mit einer Wicklung versehenen Anker 7 umfasst. Da aufgrund der Reihenschaltung das Erregerfeld des Stators 6 und der die Wicklung des Ankers 7 durchfließende Strom ihre Richtung synchron wechseln, ist ein Betrieb mit Wechselstrom möglich. Mittels einer von einem Ausgang A1 des Mikrocontrollers 2 über ein Steuersignal S angesteuerten Steuerelektrode 8 eines Leistungshalbleiters 9 wird der Motorstrom und somit eine Solldrehzahl des Ankers 7 des Antriebsmotors vorgegeben. Bei dem Leistungshalbleiter 9 handelt es sich um einen Triac, über den der Motorstrom mittels einer Phasenanschnittsteuerung vorgebbar ist. Die Aufrechterhaltung der Drehung des Ankers 7 wird mittels zweier Bürstenkontakte 10 erzielt, die bei jeder Halbdrehung einmal die Polung der Ankerwicklung ändern.

Die Drehrichtung des Ankers 7 des Antriebsmotors wird mittels zweier über jeweils einen Ausgang A2,A3 des Mikrocontrollers 2 angesteuerter als Relais 12,13 ausgebildeter Umschaltkontakte vorgegeben. In der Figur befinden sich beide Relais 12,13 im geschalteten Zustand 12', 13', was einem Überbrücken des Stators 6 des Antriebsmotors und damit einem ausgeschalteten Zustand entspricht. Für einen Rechtslauf des Ankers 7 wird das Relais 12 in den eingeschalteten Zustand 12' und das Relais 13 in den ausgeschalteten Zustand 13" versetzt. Umgekehrt wird für einen Linkslauf des Ankers 7 das Relais 12 in den ausgeschalteten Zustand 12" und das Relais 13 in den eingeschalteten Zustand 13' versetzt.

Für die Erfassung der Istdrehzahl ist ein als Tachogenerator ausgebildeter Drehgeber 15 vorgesehen, der mittels zweier Messleitungen 16 mit einem Eingang E1 des Mikrocontrollers 2 und dessen Nullpotential N verbunden ist. Anhand der erfassten Istdrehzahl regelt der Mikrocontroller 2 das über den Ausgang A1 ausgegebene Steuersignal S, um die vorgegebene Solldrehzahl einzustellen.

Ein Durchlegieren des Leistungshalbleiters 9 hat zur Folge, dass immer der maximale Strom über den Stator 6 und den Rotor 7 fließt und der Antriebsmotor mit maximal möglicher Drehzahl dreht. Als Folge dessen wird die erfasste Istdrehzahl über einen dem Regelkreis vorgegebenen Toleranzbereich hinaus die vorgegebene Solldrehzahl übersteigen. Ein Nachregeln gelingt nämlich nicht.

Eine als Teil des Mikrocontrollers 2 ausgebildete Abschalteeinrichtung 20 umfasst eine Schaltungseinheit 21, die die Abweichung der Istdrehzahl von der Solldrehzahl erfasst. Als eine erste Schutzmaßnahme wird bei einem Überschreiten der Istdrehzahl eines der beiden Relais 12,13 mittels der Abschalteeinrichtung 20 in seinen jeweils anderen Schaltzustand 12', 12", 13', 13" versetzt, also entweder eingeschalten oder ausgeschalten. In der Figur ist dieser Schaltvorgang 12', 12", 13', 13" durch zwei Pfeile dargestellt, die auf die die beiden Relais 12,13 ansteuernden Ausgänge A2,A3 weisen. Die von der Abschalteeinrichtung 20 erfasste Istdrehzahl ist mittels eines vom Eingang E1 des Mikrocontrollers 2 zur Abschalteeinrichtung 20 weisenden Pfeils dargestellt.

Welches der beiden Relais 12,13 geschalten wird, ist beliebig, ist aber in der Logik des Mikrocontrollers eindeutig hinterlegt.

Damit befinden sich entweder beide Relais 12,13 im eingeschalteten Zustand 12', 13' oder im ausgeschalteten Zustand 12",13". Der Stator 6 des Antriebsmotors ist somit überbrückt, so dass auf den Anker 7 keine Feldkraft mehr wirkt und der Antriebsmotor schließlich ausläuft.

Das Abschalten des Antriebsmotors gelingt jedoch nicht, wenn das zuletzt geschaltete Relais 12,13 in seiner Kontaktstellung insbesondere aufgrund eines zu hohen Motorstroms aufgrund eines Durchlegierens des Leistungshalbleiters 9 verschweißt ist.

Die Schaltungseinheit 21 erfasst jedoch auch nach dem Schalten eines der beiden Relais weiterhin die Abweichung der Istdrehzahl von der Solldrehzahl. Nimmt die Istdrehzahl in einem vorgegebenen Zeitintervall nicht um eine vorgegebene Differenz ab, so wird das jeweils andere Relais 12,13 geschalten, so dass es seinen Schaltungszustand 12', 12", 13', 13" ändert. Damit befinden sich nun beide Relais 12,13 im eingeschalteten Zustand 12', 13' oder im ausgeschalteten Zustand 12",13" und der Stator 6 des Antriebsmotors ist wirksam überbrückt.

Somit läuft der Antriebsmotor sicher aus, obwohl sich eines der beiden Relais 12,13 nicht mehr schalten lässt. Dabei wird jeweils der gegenüber dem ersten Schaltvorgang angestrebte Schaltzustand entgegengesetzte Schaltzustand erreicht. Wurde mit dem ersten Schaltzustand ein Ausschalten 12",13" beider Relais 12,13 angestrebt, befinden sich nunmehr beide Relais 12,13 im eingeschalteten Zustand 12', 13'. Wurde umgekehrt mit dem ersten Schaltzustand ein Einschalten 12', 13' beider Relais 12,13 angestrebt, befinden sich nunmehr beide Relais 12,13 im ausgeschalteten Zustand 12",13".

Damit sicher dasjenige Relais 12,13 geschalten wird, das im ersten Schaltvorgang nicht geschalten wurde, ist ein mit dem zuletzt durchgeführten Schaltvorgang korrespondierender Zahlenwert in einer in die Abschalteeinrichtung 20 integrierten Speichereinheit 22 in einem Register gespeichert. Somit ist das zu schaltende Relais 12,13 eindeutig identifizierbar.

Der Abschaltevorgang kann somit, ein Funktionieren des zweiten Relais 12,13 vorausgesetzt, dennoch erfolgen.

### Bezugszeichenliste

- 1: Steuereinheit
- 2: Mikrocontroller
- 3: Versorgungseinheit
- 6: Stator
- 7: Anker
- 8: Steuerelektrode
- 9: Leistungshalbleiter
- 10: Bürstenkontakt
- 12,13: Relais
- 15: Drehgeber
- 16: Messleitung
- 20: Abschalteeinrichtung
- 21: Schaltungseinheit
- 22: Speichereinheit

- E1: Eingang
- A1,A2,A3: Ausgang
- P1,P2: Phasen
- N: Nullpotential
- S: Steuersignal

## Patentansprüche

1. Steuereinheit (1) zur Steuerung und / oder Regelung eines elektrischen Antriebsmotors, mit einem Solldrehzahlgeber, mit einer Istdrehzahlerfassung (15), mit zwei die Drehrichtung des Antriebsmotors festlegenden Umschaltkontakten (12,13) und mit einer Abschalteeinrichtung (20), die eingerichtet ist, bei einem vorgegebenen Überschreiten der Solldrehzahl durch die Istdrehzahl zur Stromunterbrechung einen der Umschaltkontakte (12,13) zu schalten, wobei die Abschalteeinrichtung (20) eingerichtet ist, nach dem Schaltvorgang bei einer nicht erwartungsgemäßen Abnahme der Istdrehzahl den Schaltzustand (12',12",13',13") des jeweils anderen Umschaltkontaktes (12,13) zu ändern.

2. Steuereinheit (1) nach Anspruch 1,
**dadurch gekennzeichnet,**
**dass** die Abschalteeinrichtung (20) eingerichtet ist, den Schaltzustand (12',12",13',13") des jeweils anderen Umschaltkontaktes (12,13) zu ändern, wenn die Istdrehzahl nach Ablauf eines vorgegebenen Zeitintervalls nicht um eine vorgegebene Differenz abgenommen hat.

3. Steuereinheit (1) nach Anspruch 1 oder 2,
**gekennzeichnet durch**
einen auf einer Drehachse des Antriebsmotors angeordneten Drehgeber (15).

4. Steuereinheit (1) nach einem der Ansprüche 1 bis 3,
**dadurch gekennzeichnet,**
**dass** der Anker (7) des Antriebsmotors mittels der beiden Umschaltkontakte (12,13) bestrombar ist.

5. Steuereinheit (1) nach einem der Ansprüche 1 bis 3,
**dadurch gekennzeichnet,**
**dass** das Feld (6) des Antriebsmotors mittels der beiden Umschaltkontakte (12,13) bestrombar ist.

6. Steuereinheit (1) nach einem der Ansprüche 1 bis 5,
**dadurch gekennzeichnet,**
**dass** die Abschalteeinrichtung (20) Teil eines Mikrocontrollers (2) ist.

7. Steuereinheit (1) nach einem der Ansprüche 1 bis 6,
**gekennzeichnet durch**
eine Schaltungseinheit (21), die zur Erfassung der Abweichung der Istdrehzahl zur Solldrehzahl ausgebildet ist.

8. Steuereinheit (1) nach Anspruch 7,
**dadurch gekennzeichnet,**
**dass** die Schaltungseinheit (21) Teil des Mikrocontrollers (2) ist.

9. Steuereinheit (1) nach einem der Ansprüche 6 bis 8,
**dadurch gekennzeichnet,**
**dass** der Mikrocontroller (2) eine integrierte Speichereinheit (22) aufweist, in der der jeweils zuletzt an den Umschaltkontakten (12,13) vorgegebene Schaltzustand (12`,12",13',13") hinterlegt ist.

## Claims

1. Control unit (1) for controlling and/or regulating an electrical drive motor, comprising a setpoint speed sensor, comprising an actual speed detection system (15), comprising two switchover contacts (12, 13) fixing the direction of rotation of the drive motor and comprising a disconnection device (20), which is designed to switch one of the switchover contacts (12, 13) in the case of the setpoint speed being overshot by a preset amount by the actual speed for current interruption purposes, wherein the disconnection device (20) is designed to change the switching state (12', 12", 13', 13") of the respective other switchover contact (12, 13) after the switching operation in the case of an unexpected decrease in the actual speed.

2. Control unit (1) according to Claim 1, **characterized in that** the disconnection device (20) is designed to change the switching state (12', 12", 13', 13") of the respective other switchover contact (12, 13) when the actual speed has not decreased by a preset difference after expiry of a preset time interval.

3. Control unit (1) according to Claim 1 or 2, **characterized by** a rotary transducer (15) arranged on an axis of rotation of the drive motor.

4. Control unit (1) according to one of Claims 1 to 3, **characterized in that** the armature (7) of the drive motor can be energized by means of the two switchover contacts (12, 13).

5. Control unit (1) according to one of Claims 1 to 3, **characterized in that** the field (6) of the drive motor can be energized by means of the two switchover contacts (12, 13).

6. Control unit (1) according to one of Claims 1 to 5, **characterized in that** the disconnection device (20) is part of a microcontroller (2).

7. Control unit (1) according to one of Claims 1 to 6, **characterized by** a circuit unit (21), which is designed to detect the discrepancy between the actual speed and the setpoint speed.

8. Control unit (1) according to Claim 7, **characterized in that** the circuit unit (21) is part of the microcontroller (2).

9. Control unit (1) according to one of Claims 6 to 8, **characterized in that** the microcontroller (2) has an integrated memory unit (22), in which the switching state (12', 12", 13', 13") preset in each case last at the switchover contacts (12, 13) is stored.

## Revendications

1. Contrôleur (1) destiné à commander et/ou réguler un moteur d'entraînement électrique, comprenant un codeur de vitesse de rotation de consigne, comprenant un dispositif de détection de vitesse de rotation réelle (15), comprenant deux contacts inverseurs (12, 13) définissant le sens de rotation du moteur d'entraînement et comprenant un dispositif de mise hors circuit (20) qui est conçu pour, dans le cas d'un dépassement prédéfini de la vitesse de rotation de consigne par la vitesse de rotation réelle, commuter en vue d'interrompre le courant de l'un des contacts inverseurs (12, 13), le dispositif de mise hors circuit (20) étant conçu pour, après l'opération de commutation et en cas d'une diminution non conforme aux attentes de la vitesse de rotation réelle, modifier l'état de commutation (12', 12" , 13', 13") de l'autre contact inverseur (12, 13) respectif.

2. Contrôleur (1) selon la revendication 1, **caractérisé en ce que** le dispositif de mise hors circuit (20) est conçu pour modifier l'état de commutation (12', 12'', 13', 13") de l'autre contact inverseur (12, 13) respectif lorsque la vitesse de rotation réelle n'a pas diminué d'une différence prédéfinie après écoulement d'un intervalle de temps prédéfini.

3. Contrôleur (1) selon la revendication 1 ou 2, **caractérisé par** un codeur rotatif (15) monté sur un axe de rotation du moteur d'entraînement.

4. Contrôleur (1) selon l'une des revendications 1 à 3, **caractérisé en ce que** l'induit (7) du moteur d'entraînement peut être alimenté électriquement au moyen des deux contacts inverseurs (12, 13).

5. Contrôleur (1) selon l'une des revendications 1 à 3, **caractérisé en ce que** le champ (6) du moteur d'entraînement peut être alimenté électriquement au moyen des deux contacts inverseurs (12, 13).

6. Contrôleur (1) selon l'une des revendications 1 à 5, **caractérisé en ce que** le dispositif de mise hors circuit (20) fait partie d'un microcontrôleur (2).

7. Contrôleur (1) selon l'une des revendications 1 à 6, **caractérisé par** une unité de commutation (21) qui est configurée pour détecter l'écart entre la vitesse de rotation réelle et la vitesse de rotation de consigne.

8. Contrôleur (1) selon la revendication 7, **caractérisé en ce que** l'unité de commutation (21) fait partie du microcontrôleur (2).

9. Contrôleur (1) selon l'une des revendications 6 à 8, **caractérisé en ce que** le microcontrôleur (2) possède une unité de mémoire intégrée (22) dans laquelle est stocké respectivement le dernier état de commutation (12', 12", 13', 13") prédéfini au niveau des contacts inverseurs (12, 13).
